# FASCICULE DE BREVET EUROPEEN

(11) **EP 2 257 598 B1**
(45) Date de publication et mention de la délivrance du brevet: **09.09.2020**
(21) Numéro de dépôt: 09724773.8
(22) Date de dépôt: 23.03.2009
(51) Int. Cl.: C08L 77/00, C08L 77/06, C08J 5/00, C08L 61/06, C08K 3/34, C08K 7/00

(54) **COMPOSITION POLYAMIDE**
POLYAMIDZUSAMMENSETZUNG
POLYAMIDE COMPOSITION

(30) Priorité: 25.03.2008 FR 0801593
(43) Date de publication de la demande: 08.12.2010
(73) Titulaire: PERFORMANCE POLYAMIDES S.A.S., 75009 Paris (FR)
(72) Inventeur: ANDRES, Olivier, F-69780 Mions (FR); CLEMENT, Florence, F-69510 Yzeron (FR); PEDUTO, Nicolangelo, I-20131 Milano (IT)
(74) Mandataire: BASF IP Association
(86) Numéro de dépôt international: PCT/EP2009/053377
(87) Numéro de publication internationale: WO 2009/118288

(56) Documents cités:
- EP-A- 1 626 066
- WO-A-2004/009706

## Description

La présente invention concerne des compositions polyamides ayant une bonne stabilité dimensionnelle comprenant une résine novolaque et des charges à structures en feuillets nanométriques. L'invention concerne aussi des procédés de fabrication de telles compositions et leurs utilisations pour la réalisation de différents articles, notamment par moulage par injection, pour diverses applications.

La demanderesse a découvert de manière tout a fait surprenante que l'utilisation combinée d'une résine novolaque et de charges à structures en feuillets nanométriques permettait d'obtenir une composition polyamide présentant une stabilité dimensionnelle accrue en environnement humide et en température, et de bonnes propriétés mécaniques, notamment une bonne résistance aux chocs.

La présente invention a pour principal objet une composition polyamide comprenant au moins une résine novolaque et des charges à structures en feuillets nanométriques.

La composition peut comprendre de 1 à 25 % en poids, particulièrement de 2 à 10 % en poids, plus particulièrement encore de 3 à 7 % en poids de résine novolaque, par rapport au poids total de la composition.

La composition peut comprendre de 0,1 à 15 % en poids, particulièrement de 1 à 10 % en poids, plus préférentiellement de 1 à 5 % en poids de charges à structures en feuillets nanométriques, par rapport au poids total de la composition.

Comme polyamides utilisables selon l'invention, on peut citer les polyamides et copolyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Selon l'invention, la composition comprend au moins un polyamide choisi dans le groupe comprenant le polyamide 6, le polyamide 66, le polyamide 6.10, le polyamide 11, le polyamide 12, le polyamide 6.12, le polymétaxylylènediamine (MXD6), le polyamide 66/6T, le polyamide 66/6I, les mélanges et copolyamides, tels que le copolyamide 6.66 par exemple.

La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

La composition selon l'invention présente préférentiellement de 40 à 95 % en poids de polyamide, notamment de 40 à 80 % en poids, par rapport au poids total de la composition. La composition polyamide peut en outre comprendre un ou plusieurs autres polymères, de préférence des polymères thermoplastiques tels que le polyamide, les polyoléfines, l'ABS ou le polyester.

Les résines novolaques sont généralement des composés de type polyhydroxy phénol, par exemple des produits de condensation de composés phénoliques avec des aldéhydes. Ces réactions de condensation sont généralement catalysées par un acide.

Les composés phénoliques peuvent être choisis seuls ou en mélange parmi le phénol, le crésol, le xylénol, le naphtol, les alkylphénols, comme le butyl-phénol, le terbutyl-phénol ou l'isooctyl-phénol ; ou tout autre phénol substitué. L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, et le glycoxal.

Selon un mode de réalisation particulier de l'invention, la résine est un produit de condensation du phénol et du formaldéhyde.

La structure moléculaire générique de la résine phénol formaldéhyde est notamment la suivante : 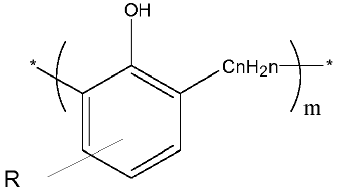 dans laquelle :
- R peut être un atome d'hydrogène, ou un groupe hydrocarboné, comprenant notamment de 1 à 10 atomes de carbone ;
- n est compris entre 1 et 3 ; et
- m est compris entre 2 et 15, préférentiellement entre 2 et 10.

Les résines novolaques utilisées ont avantageusement un poids moléculaire supérieur compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

La résine novolaque peut être ajoutée directement au polyamide fondu en tant que tel ou via un mélange maitre, notamment dans une composition polymérique, préférentiellement polyamide.

La composition selon l'invention comprend aussi des charges à structures en feuillets nanométriques qui sont des montmorillonites avec une épaisseur comprise entre 0,5 à 5 nm, ayant un diamètre compris entre 50 et 600 nm. De telles montmorillonites peuvent présenter un facteur de forme supérieur à 100.

On entend par charges à structures en feuillets nanométriques, des charges comprenant ou composées de feuillets nanométriques, ou nanofeuillets, c'est-à-dire ayant leur plus petite dimension de l'ordre du nanomètre, notamment une épaisseur comprise entre 0,1 et 5 nm.

Ces nanofeuillets présentent habituellement une longueur comprise entre 100 et 500 nm, et une épaisseur comprise entre 0,1 et 5 nm.

Ces charges présentent généralement un facteur de forme supérieur à 50, préférentiellement supérieur à 100. Par facteur de forme, on entend le rapport entre la plus grande dimension caractéristique de la forme des charges et la plus petite dimension caractéristique de la forme des charges.

Ces charges peuvent se présenter sous différentes formes dans la matrice polyamide. Elles peuvent par exemple se présenter sous la forme de feuillets nanométriques élémentaires ou un agglomérat non agencé de feuillets nanométriques élémentaires. Ces charges peuvent aussi se présenter sous une forme proche de leur forme naturelle, c'est-à-dire sous forme d'un empilement de feuillets nanométriques. Ces empilements peuvent être dits intercalés par des composés organiques ou inorganiques comme mentionné supra. Il est également possible que les charges selon l'invention se présentent dans la matrice polyamide sous la forme d'agglomérats d'empilements de feuillets nanométriques.

Dans la composition selon l'invention, lesdites charges peuvent se présenter sous diverses formes en fonction du procédé d'incorporation utilisé.

Ces charges sont dispersées dans la composition polyamide de l'invention. La dispersion peut être de plus ou moins bonne qualité.

Les feuillets nanométriques sont généralement obtenus à partir d'un composé présentant une structure en feuillets. Notamment au cours de la préparation de la composition ou du polymère les feuillets peuvent se séparer les uns des autres pour ainsi former les feuillets nanométriques.

La géométrie des charges, à savoir leurs formes et dimensions peut être observée dans les compositions par microscopie, ou être assimilée à celle des feuillets du composé à partir duquel elles sont obtenues. Comme mentionné plus haut, il est possible que la séparation des feuillets ne soit pas totale et que des agglomérats soient présents dans la composition.

La séparation des feuillets est souvent dénommée exfoliation, dissociation et/ou délamination. Les processus qui sont mis en jeu lors de cette séparation peuvent être différents selon les composés utilisés et/ou les procédés utilisés. Ils mènent généralement à l'obtention de charges à structures en feuillets nanométriques à facteur de forme plus ou moins élevé.

Ces montmorillonites peuvent être d'origine naturelle, synthétique, ou naturelle modifiée.

La séparation des feuillets peut être favorisée par un traitement préalable à l'aide d'un composé organique ou inorganique, par exemple pour augmenter la distance entre les feuillets. La nature du traitement peut dépendre de la nature du composé à structure en feuillets. On cite à titre d'exemples les traitements par des ioniums, c'est à dire les ammoniums ou phosphoniums substitués, pour le traitement des montmorillonites. Des montmorillonites déjà traitées sont disponibles dans le commerce. De nombreux traitements et/ou procédés d'incorporation de composés à structure en feuillets dans des thermoplastiques, par exemple dans du polyamide, ont été décrits.

Pour le traitement des composés à structure en feuillets, tels que les montmorillonites, on cite en particulier les traitements par échange de cations contenus initialement dans le composé. Il s'agit par exemple de cations organiques de type ioniums. Les cations organiques peuvent être choisis parmi les phosphoniums et les ammoniums, par exemple les ammoniums primaires à quaternaires. On peut citer par exemple les aminoacides protonés tels que l'acide 12-aminododecanoique protoné en ammonium, les amines primaires à tertiaires protonées et les ammoniums quaternaires. Les chaînes attachées à l'atome d'azote ou de phosphore de l'ionium peuvent être aliphatiques, aromatiques, arylaliphatiques, linéaires ou branchées et peuvent présenter des motifs oxygénés, par exemple des motifs hydroxy ou ethoxy. On peut citer à titre d'exemple de traitements organiques ammoniums le dodecyl ammonium, l'octadecyl ammonium, le bis(2-hydroxyethyl) octadecyl methyl ammonium, le dimethyl dioctadecyl ammonium, l'octadecyl benzyl dimethyl ammonium, le tetramethyl ammonium. On peut citer à titre d'exemple de traitements organiques phosphonium les alkyl phosphonium tels que le tetrabutyl phosphonium, le trioctyl octadecyl phosphonium, l'octadecyl triphenyl phosphonium. Ces listes n'ont aucun caractère limitatif.

Les montmorillonites comme composés à structure en feuillets selon l'invention peuvent également être traités par des acides gras saturés ou insaturés ou leurs dérivés ou leurs sels et/ou par des dérivés siloxanes ou silicones. On cite particulièrement la demande US 2007/0072980.

Selon un mode de réalisation préféré de l'invention, les compositions sont composées de résine polyamide et de charges à structures en feuillets nanométriques exfoliées, ou partiellement exfoliées, dispersées dans la résine, obtenues par intercalation ou exfoliation d'un phyllosilicate, par exemple une montmorillonite ayant subi préalablement un traitement, notamment un gonflement par échange d'ions. Des exemples de traitements gonflants pouvant être utilisés sont par exemple décrits dans le brevet EP 0398551. Tous les traitements connus pour favoriser l'exfoliation des phyllosilicates dans une matrice polymère peuvent être utilisés. On peut par exemple utiliser une argile traitée par un composé organique commercialisé par la société Laporte sous la marque Cloisite®. On peut également utiliser des argiles à base de montmorillonites commercialisées par la Société Nanocor sous la gamme Nanomer®. On peut également utiliser des montmorillonites traitées et commercialisées par la société Süd Chemie sous la gamme Nanofil®.

Toute méthode permettant d'obtenir une dispersion de charges à structures en feuillets nanométriques exfoliées dans un polymère peut être utilisée pour mettre en œuvre l'invention. On utilise généralement des procédés de polymérisation in situ ou de mélange en fondu avec le polyamide.

Un premier procédé consiste à mélanger le composé à structure en feuillets à disperser, éventuellement traité par exemple par un agent gonflant, aux monomères du polyamide dans le milieu de polymérisation, puis à polymériser. Dans ce cas le polymère est de préférence le polyamide. On introduit donc les charges à structures en feuillets nanométriques éventuellement traitées dans un milieu comprenant des monomères de polyamide puis on polymérise afin d'obtenir un polyamide comprenant les charges nanocomposites exfoliées.

Un autre procédé consiste à mélanger au polyamide soit le composé à structure en feuillets à disperser, éventuellement traité par exemple par un agent gonflant, soit les charges à structures en feuillets nanométriques déjà exfoliées éventuellement traitées, et à éventuellement soumettre le mélange à un cisaillement important, par exemple dans un dispositif d'extrusion bi-vis, afin de réaliser une bonne dispersion. Le polymère en question est entendu soit comme l'un des composés pris individuellement, de préférence du polyamide, soit comme le mélange des différents composés de la composition. Le composé à structure en feuillets peut notamment être ajouté sous forme de mélange maître, par exemple dans une composition polymérique, notamment polyamide, destiné à être mélangé au polyamide pour former la composition polyamide selon l'invention.

Un autre procédé consiste à mélanger à un polymère fondu un mélange concentré d'un polymère et de charges à structures en feuillets nanométriques exfoliées, préparé par exemple selon l'un des procédés décrits précédemment.

Pour améliorer les propriétés mécaniques d'une composition polyamide selon l'invention, on lui adjoint au moins une charge de renfort et/ou de remplissage préférentiellement choisie dans le groupe comprenant les charges fibreuses telles que les fibres de verre, les fibres de carbone et les fibres aramides, les charges minérales non fibreuses telles que les argiles, le kaolin, le mica, la wollastonite, et la silice. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 20 et 50 %.

La composition selon l'invention en outre comprend des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agents d'amélioration de la résilience comme des élastomères éventuellement greffés, les stabilisants lumière et/ou thermique, les antioxydants, les antistatiques les, colorants, les pigments, les matifiants, les additifs d'aide au moulage ou autres additifs conventionnels.

Selon l'invention, la composition polyamide est constituée de :
- au moins un polyamide choisi dans le groupe comprenant le polyamide 6, le polyamide 66, le polyamide 6.10, le polyamide 11, le polyamide 12, le polyamide 6.12, le polymétaxylylènediamine (MXD6), le polyamide 66/6T, le polyamide 66/6I, les mélanges et copolyamides,
- une résine novolaque,
- des montmorillonites comme charges à structures en feuillets nanométriques,
- des charges de renfort ou de remplissage, et
- des additifs choisis dans le groupe comprenant les lubrifiants, les plastifiants, les agents nucléants, les catalyseurs, les agents d'amélioration de la résilience, les stabilisants lumière et/ou thermique, les antioxydants, les antistatiques les, colorants, les pigments, les matifiants, et les additifs d'aide au moulage.

La composition peut également comprendre des charges électriquement conductrices ou antistatiques ; préférentiellement choisies dans le groupe comprenant : le noir de carbone conducteur, un métal, un agent antistatique, le graphite, le verre et/ou une charge minérale enrobée par une couche de métal, et/ou leur mélange, préférentiellement le noir de carbone conducteur. Le noir de carbone conducteur est décrit notamment dans Carbon Black second Edition Revised and Expansed, Science and Technology édité par JB. Donnet, RC Bansal et MJ Wang, Marcel Dekker Inc, pages 271-275.

Pour la réalisation d'une composition polyamide, ces charges et additifs peuvent être ajoutés au polyamide par des moyens usuels adaptés à chaque charge ou additif, tels que par exemple lors de la polymérisation ou en mélange en fondu. La résine novolaque est préférentiellement ajoutée au polyamide par voie fondue, notamment lors d'une étape d'extrusion du polyamide, ou par voie solide dans un mélangeur mécanique ; le mélange solide pouvant ensuite être mis en fusion, par exemple par un procédé d'extrusion.

La composition polyamide selon l'invention est notamment utilisée en tant que matrice, notamment pour l'obtention d'articles, notamment moulés. Cette composition est préférentiellement une poudre à mouler.

Les compositions selon l'invention peuvent être utilisées comme matière première dans le domaine des plastiques techniques, par exemple pour la réalisation d'articles obtenus par moulage par injection, par injection/soufflage, par extrusion ou par extrusion/soufflage. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

La présente invention concerne également l'utilisation d'une composition telle que définie précédemment pour la fabrication d'un article notamment destiné à être peint par un procédé électrostatique de déposition de la peinture. Ces articles peuvent être notamment réalisés par moulage, moulage par injection, extrusion, ou extrusion-soufflage. Ces articles sont particulièrement appropriés pour les procédés de peinture électrostatiques « inline » et « online » utilisés dans l'industrie automobile.

L'application de la peinture sur l'article peut être effectuée, par exemple, par vaporisation ou immersion. Généralement, un procédé d'application de peinture par déposition électrostatique sur un article comprend au moins les étapes suivantes : traitement en cataphorèse de l'article à des températures notamment comprises entre 150 et 220°C, éventuellement application d'un apprêt (primer) par vaporisation électrostatique, et enfin application de la peinture par vaporisation électrostatique. Chaque étape de vaporisation peut être suivie d'étape(s) de chauffage à des températures comprises entre 100 et 200°C, et d'étape(s) de refroidissement.

La présente invention concerne aussi un article peint par un procédé d'application de peinture par déposition électrostatique.

Ces articles selon l'invention peuvent être par exemple des pièces automobiles en particulier des pièces de carrosserie, des tubes destinés au transport de fluides ou de gaz, des réservoirs, des filtres, des revêtements, des films et/ou des couvertures plastiques de réservoirs.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Composés utilisés :
- PA : PA 66 Type SB 27 AD1 de la société Rhodia, ayant un IV de 135 à 145 ml/g selon la norme ISO 307
- Novolac : Résine phénol formaldéhyde - Rhenosin PR95 fournie par la société Rhein Chemie
- Charges : Nanofil SE3010 fourni par la société Süd Chemie
- Additifs : lubrifiant stéarate de calcium et stabilisant thermique Irganox B1171

Des compositions à base de PA66 sont obtenues par extrusion sur une extrudeuse double-vis ZSK40, en ajoutant des valeurs variables de charges par rapport au poids total de la composition.

Les caractéristiques de la mise en œuvre sont les suivantes :
Extrudeuse double vis : W&P ZSK 40, avec
- un profil de température (°C) zone 1 (début) zone 8 (tête) : 260, 260, 260, 260, 265, 270, 270, 280
- vitesse de vis (rpm) : 260
- couple moteur (N/m) : de 28 à 35 selon les compositions
- vide (bar) : - 0,9

Des éprouvettes sont réalisées par moulage par injection avec la géométrie suivante : éprouvettes multifonctions ISO 527 et plaques 60x60x2 mm avec la Presse DEMAG 50 Tonnes.

Les conditions de mise en œuvre sont les suivantes :
Presse DEMAG 50 tonnes, vis de 35 mm
T (°C) fourreau: de 250 à 270
T (°C) moule : 80
Vitesse d'injection (cc/s) : 40,
Pression d'injection (bar) 150
Pression de maintien (bar) : 40
Contre pression (bar) : 15
Vitesse de vis (rpm) : 160

Différentes propriétés sont mesurées et mentionnées dans le Tableau 1.

La résistance au choc Charpy non entaillé est mesurée selon la norme ISO179/1eU.

Mesure du CLTE (Coefficient of Linear Thermal Expansion, ou Coefficient Linéaire d'Expansion Thermique) : ces essais ont été conduits sur une machine de traction ZWICK Z020 dans les conditions suivantes :
- Rampe de température : 0,5°C/min. Sens longitudinal de l'éprouvette.
- Eprouvettes étuvées 1h30 à 160°C avant essai.

On suit l'allongement de l'éprouvette dans le sens longitudinal, et le CLTE est obtenu en tout point par la dérivée de la courbe d'allongement en fonction de la température.

Des plaques 60x60x2 mm sont séchées à 95° C, 12 heures sous vide. Elles sont pesées et immergées dans l'eau préalablement chauffée à 100°C. A intervalles réguliers elle sont essuyées et pesées jusqu'à ce que leur poids devienne constant. Le poids est enregistré en fonction du temps. La variation dimensionnelle est mesurée dans le sens parallèle et perpendiculaire à la direction d'injection avec l'aide d'un pied à coulisse.

**Tableau 1**

| **Composition** | **Novolac (%/p)** | **Charges (%/p)** | **Variation dimensionnelle (%)** | **Choc Charpy non-entaillé (kJ/m²)** | **CLTE à 100°C (10⁻⁵m/m.°C)** |
|---|---|---|---|---|---|
| C1* | 0 | 0 | 1,735 | 82 | 10,9 |
| C2* | 5 | 0 | 1,300 | 62 | - |
| C3* | 0 | 5 | 1,255 | 58 | - |
| 1 ** | 5 | 2,5 | 0,935 | 82 | - |
| 2** | 5 | 5 | 0,860 | 83 | 8,2 |

| | | | | | |
|---|---|---|---|---|---|
| * essai comparatif ** pas selon l'invention | | | | | |

On observe ainsi que les compositions 1 et 2 présentent une très bonne stabilité dimensionnelle en environnement humide et en température (CLTE réduit), et de bonnes propriétés mécaniques de résistance aux chocs.

## Revendications

1. Composition polyamide constituée de :
- au moins un polyamide choisi dans le groupe comprenant le polyamide 6, le polyamide 66, le polyamide 6.10, le polyamide 11, le polyamide 12, le polyamide 6.12, le polymétaxylylènediamine (MXD6), le polyamide 66/6T, le polyamide 66/6I, les mélanges et copolyamides,
- une résine novolaque,
- des charges à structures en feuillets nanométriques,
- des charges de renfort ou de remplissage, et
- des additifs choisis dans le groupe comprenant les lubrifiants, les plastifiants, les agents nucléants, les catalyseurs, les agents d'amélioration de la résilience, les stabilisants lumière et/ou thermique, les antioxydants, les antistatiques, les colorants, les pigments, les matifiants, et les additifs d'aide au moulage;
les charges à structures en feuillets nanométriques étant des charges comprenant ou composées de feuillets nanométriques, ou nanofeuillets, c'est-à- dire ayant leur plus petite dimension de l'ordre du nanomètre, **caractérisée en ce que** les charges à structures en feuillets nanométriques sont des montmorillonites présentant un diamètre comprise entre 50 et 600 nm et une épaisseur comprise entre 0,5 et 5 nm.

2. Composition selon la revendication 1, **caractérisée en ce qu'**elle comprend de 1 à 25 % en poids de résine novolaque par rapport au poids total de la composition.

3. Composition selon la revendication 1 ou 2, **caractérisée en ce qu'**elle comprend de 2 à 10 % en poids de résine novolaque par rapport au poids total de la composition.

4. Composition selon l'une quelconque des revendications 1 à 3, **caractérisée en ce qu'**elle comprend de 3 à 7 % en poids de résine novolaque par rapport au poids total de la composition.

5. Composition selon l'une quelconque des revendications 1 à 4, comprenant de 0,1 à 15 % en poids de charges à structures en feuillets nanométriques, par rapport au poids total de la composition.

6. Composition selon l'une quelconque des revendications 1 à 5, **caractérisée en ce qu'**elle comprend de 1 à 10 % en poids de charges à structures en feuillets nanométriques, par rapport au poids total de la composition.

7. Composition selon l'une quelconque des revendications 1 à 6, **caractérisée en ce qu'**elle comprend de 1 à 5 % en poids de charges à structures en feuillets nanométriques, par rapport au poids total de la composition.

8. Composition selon l'une quelconque des revendications 1 à 7, **caractérisée en ce que** les charges à structures en feuillets nanométriques présentent un traitement à base d'ioniums, d'acides gras saturés ou insaturés ou leurs dérivés ou leurs sels et/ou par des dérivés siloxanes ou silicones.

9. Procédé de fabrication d'une composition polyamide selon l'une quelconque des revendications 1 à 8, comprenant une résine novolaque et des charges à structures en feuillets nanométriques par ajout d'un composé à structure en feuillets à disperser, éventuellement traité, aux monomères du polyamide dans le milieu de polymérisation, puis à polymériser ledit polyamide.

10. Procédé de fabrication d'une composition polyamide selon l'une quelconque des revendications 1 à 8, comprenant une résine novolaque et des charges à structures en feuillets nanométriques par mélange du polyamide avec soit le composé à structure en feuillets à disperser, éventuellement traité par exemple par un agent gonflant, soit les charges à structures en feuillets nanométriques exfoliées éventuellement traitées.

11. Article obtenu par mise en forme d'une composition selon l'une 5 quelconque des revendications 1 à 8, par moulage par injection, par injection/soufflage, par extrusion ou par extrusion soufflage.

12. Article obtenu par mise en forme d'une composition selon l'une quelconque des revendications 1 à 8 destiné à être peint par un procédé électrostatique de déposition de la peinture.

## Patentansprüche

1. Polyamidzusammensetzung, die aus Folgendem besteht:
- mindestens einem Polyamid, das aus der Gruppe ausgewählt ist, welche Polyamid 6, Polyamid 66, Polyamid 6.10, Polyamid 11, Polyamid 12, Polyamid 6.12, Polymetaxylylendiamin (MXD6), Polyamid 66/6T, Polyamid 66/6I, Mischungen und Copolyamide umfasst,
- einem Novolak-Harz,
- Füllstoffen mit Schichtstrukturen im Nanometerbereich,
- verstärkend wirkenden oder volumengebenden Füllstoffen, und
- Zusatzstoffen, die aus der Gruppe ausgewählt sind, welche Gleitmittel, Weichmacher, Nukleierungsmittel, Katalysatoren, Mittel zur Verbesserung der Schlagzähigkeit, UV- und Wärmestabilisatoren, Antioxidantien, Antistatika, Farbstoffe, Pigmente, Mattglanzmittel und Formgebungshilfsmittel umfasst;
wobei es sich bei den Füllstoffen mit Schichtstrukturen im Nanometerbereich um Füllstoffe handelt, die Schichten im Nanometerbereich, oder Nanoschichten, umfassen oder sich daraus zusammensetzen, das heißt, dass ihre kleinste Abmessung im Nanometerbereich liegt, **dadurch gekennzeichnet, dass** es sich bei den Füllstoffen mit Schichtstrukturen im Nanometerbereich um Montmorillonite handelt, welche einen Durchmesser im Bereich von 50 bis 600 nm und eine Dicke im Bereich von 0,5 bis 5 nm aufweisen.

2. Zusammensetzung nach Anspruch 1, **dadurch gekennzeichnet, dass** sie 1 bis 25 Gewichts-% an Novolak-Harz umfasst, bezogen auf das Gesamtgewicht der Zusammensetzung.

3. Zusammensetzung nach Anspruch 1 oder 2, **dadurch gekennzeichnet, dass** sie 2 bis 10 Gewichts-% an Novolak-Harz umfasst, bezogen auf das Gesamtgewicht der Zusammensetzung.

4. Zusammensetzung nach einem beliebigen der Ansprüche 1 bis 3, **dadurch gekennzeichnet, dass** sie 3 bis 7 Gewichts-% an Novolak-Harz umfasst, bezogen auf das Gesamtgewicht der Zusammensetzung.

5. Zusammensetzung nach einem beliebigen der Ansprüche 1 bis 4, **dadurch gekennzeichnet, dass** sie 0,1 bis 15 Gewichts-% an Füllstoffen mit Schichtstruktur im Nanometerbereich umfasst, bezogen auf das Gesamtgewicht der Zusammensetzung.

6. Zusammensetzung nach einem beliebigen der Ansprüche 1 bis 5, **dadurch gekennzeichnet, dass** sie 1 bis 10 Gewichts-% an Füllstoffen mit Schichtstruktur im Nanometerbereich umfasst, bezogen auf das Gesamtgewicht der Zusammensetzung.

7. Zusammensetzung nach einem beliebigen der Ansprüche 1 bis 6, **dadurch gekennzeichnet, dass** sie 1 bis 5 Gewichts-% an Füllstoffen mit Schichtstruktur im Nanometerbereich umfasst, bezogen auf das Gesamtgewicht der Zusammensetzung.

8. Zusammensetzung nach einem beliebigen der Ansprüche 1 bis 7, **dadurch gekennzeichnet, dass** die Füllstoffe mit Schichtstrukturen im Nanometerbereich eine Behandlung auf Grundlage von lonium-Verbindungen, gesättigten oder ungesättigten Fettsäuren oder deren Derivaten oder deren Salzen und/oder mittels Siloxan- oder Silikonderivaten aufweisen.

9. Verfahren zur Herstellung einer Polyamidzusammensetzung nach einem beliebigen der Ansprüche 1 bis 8, welche ein Novolak-Harz und Füllstoffe mit Schichtstrukturen im Nanometerbereich umfasst, durch Zusatz einer Verbindung mit Schichtstrukturen, wobei diese, möglicherweise nach einer Behandlung, in den Monomeren des Polyamids im Polymerisationsmedium zu dispergieren ist, woraufhin das Polyamid polymerisiert wird.

10. Verfahren zur Herstellung einer Polyamidzusammensetzung nach einem beliebigen der Ansprüche 1 bis 8, welche ein Novolak-Harz und Füllstoffe mit Schichtstrukturen im Nanometerbereich umfasst, durch Vermischen des Polyamids entweder mit der Verbindung mit Schichtstrukturen, welche zu dispergieren ist, nachdem sie möglicherweise behandelt wurde, beispielsweise durch ein Quellmittel, oder mit den in Schichten zerfallenden Füllstoffen mit Schichtstrukturen im Nanometerbereich, nachdem diese möglicherweise behandelt wurden.

11. Gegenstand, der erhalten wurde, indem eine Zusammensetzung nach einem beliebigen der Ansprüche 1 bis 8 einer Formgebung unterzogen wurde, durch Spritzgießen, durch Spritzstreckblasen, durch Extrusion oder durch Extrusionsblasformen.

12. Gegenstand, der erhalten wurde, indem eine Zusammensetzung nach einem beliebigen der Ansprüche 1 bis 8 einer Formgebung unterzogen wurde, wobei er dazu bestimmt ist, mittels eines Verfahrens zum elektrostatischen Abscheiden des Anstrichmittels angestrichen zu werden.

## Claims

1. A polyamide composition consisting of:
- at least one polyamide chosen from the group consisting of polyamide 6, polyamide 66, polyamide 6.10, polyamide 11, polyamide 12, polyamide 6.12, poly(meta-xylylenediamine) (MXD6), polyamide 66/6T, polyamide 66/6I, the mixtures and copolyamides,
- a novolak resin,
- fillers having nanometric sheet structures,
- reinforcing or bulking fillers, and
- additives chosen from the group consisting of lubricants, plasticizers, nucleating agents, catalysts, agents for improving the toughness, light and/or heat stabilizers, antioxidants, antistatics, dyes, pigments, mattifying agents and molding aids;
the fillers having nanometric sheet structures being fillers comprising or composed of nanometric sheets, or nanosheets, that is to say having their smallest dimension of the order of the nanometer, **characterized in that** the fillers having nanometric sheet structures are montmorillonites exhibiting a diameter of between 50 and 600 nm and a thickness of between 0.5 and 5 nm.

2. The composition as claimed in claim 1, **characterized in that** it comprises from 1% to 25% by weight of novolak resin, with respect to the total weight of the composition.

3. The composition as claimed in claim 1 or 2, **characterized in that** it comprises from 2% to 10% by weight of novolak resin, with respect to the total weight of the composition.

4. The composition as claimed in any one of claims 1 to 3, **characterized in that** it comprises from 3% to 7% by weight of novolak resin, with respect to the total weight of the composition.

5. The composition as claimed in any one of claims 1 to 4, comprising from 0.1% to 15% by weight of fillers having nanometric sheet structures, with respect to the total weight of the composition.

6. The composition as claimed in any one of claims 1 to 5, **characterized in that** it comprises from 1% to 10% by weight of fillers having nanometric sheet structures, with respect to the total weight of the composition.

7. The composition as claimed in any one of claims 1 to 6, **characterized in that** it comprises from 1% to 5% by weight of fillers having nanometric sheet structures, with respect to the total weight of the composition.

8. The composition as claimed in any one of claims 1 to 7, **characterized in that** the fillers having nanometric sheet structures exhibit a treatment based on ioniums, on saturated or unsaturated fatty acids or their derivatives or their salts and/or by siloxane or silicone derivatives.

9. A process for the manufacture of a polyamide composition as claimed in any one of claims 1 to 8, comprising a novolak resin and fillers having nanometric sheet structures, by addition of a compound having a sheet structure to be dispersed, optionally treated, to the monomers of the polyamide in the polymerization medium, and in then polymerizing said polyamide.

10. A process for the manufacture of a polyamide composition as claimed in any one of claims 1 to 8, comprising a novolak resin and fillers having nanometric sheet structures, by mixing the polyamide either with the compound having a sheet structure to be dispersed, optionally treated, for example, with a blowing agent, or with the fillers having exfoliated and optionally treated nanometric sheet structures.

11. An article obtained by forming the composition as claimed in any one of claims 1 to 8, by injection molding, by injection/blow molding, by extrusion or by extrusion/blow molding.

12. An article obtained by forming the composition as claimed in any one of claims 1 to 8, which article is intended to be painted by an electrostatic process for deposition of the paint.
